# EUROPEAN PATENT SPECIFICATION

(11) **EP 2 100 835 B1**
(45) Date of publication and mention of the grant of the patent: **08.12.2010**
(21) Application number: 09002840.8
(22) Date of filing: 27.02.2009
(51) Int. Cl.: B65G 57/16, B29C 51/44

(54) **Machine and process for stacking thermoformed articles**
Maschine und Verfahren zum Stapeln thermogeformter Gegenstände
Machine et processus d'empilage d'articles thermoformés

(30) Priority: 11.03.2008 IT mi20080413
(43) Date of publication of application: 16.09.2009
(73) Proprietor: Amut S.p.A., 28100 Novara (IT)
(72) Inventor: Pesavento, Mauro, 28100 Novara (IT); Milani, Angelo, 28100 Novara (IT)
(74) Representative: Valentini, Giuliano

(56) References cited:
- EP-A- 0 995 581
- EP-A- 1 570 972
- DE-A1- 10 356 001

## Description

The present invention relates to a machine and a process for stacking thermoformed articles, and in particular to a machine for forming stacks, composed of a predetermined number of articles, which are subsequently transferred to further processing stations, such as rimming and/or assembly stations.

A machine according to the present invention can be used, for example, in thermoforming plants for the production of hollow articles, such as cups, bowls or other similar disposable products.

These articles are produced from one or more thermoformable materials, such as polystyrene, polypropylene, polyethylene or the like, which are extruded in the form of a continuous sheet. The articles formed and separated from the rest of the sheet are collected in stacks and transferred to subsequent processing steps, such as rimming for cups or assembly in the case of other articles.

The machines for forming and transferring stacks in thermoforming systems must above all guarantee continuity of production cycles. In other words, it must be possible to transfer the stacks without necessarily having to interrupt the production cycles of the articles.

An example of a prior art stacking machine is described in the patent application no. EP-A-1570972. In this machine, the articles ejected at each cycle from a moving mould of tilting type are simultaneously collected in a moving collection plate.

The articles received by the moving collection plate at each cycle are then transferred immediately to an intermediate plate which collects and forms the complete stacks, which are in turn transferred to a moving unloading basket. The basket is then moved to the position for unloading the stacks onto a conveyor, i.e. to the position in which the stacks are transferred each time onto the conveyor to be conveyed to subsequent processing stations.

This type of solution is particularly cumbersome with respect to the rest of the plant and requires a large number of moving members, in particular the basket which has a very large mass.

The moments of inertia of the moving masses can form a limit to the productivity of the machine, cause considerable mechanical stresses and can consequently give rise to frequent machine stops for maintenance or repair operations on the machine.

DE 103 56 001 A1 describes a stacking machine according to the preamble of claim 1, wherein sub-stacks are formed.

The object of the present invention is to provide a machine for stacking thermoformed articles with a limited number of moving parts with respect to prior art.

Another object of the present invention is to provide a machine of the aforesaid type which allows the masses of the moving members to be reduced.

Yet another object of the present invention is to eliminate cumbersome and complex intermediate collection and storage baskets in which a number of stacks equivalent to the number of cavities of the mould are formed.

A further object of the present invention is to provide a machine of the aforesaid type which is of simple construction, compact and reliable in its operation.

These objects are achieved by the present invention, which relates to a machine for stacking thermoformed articles, including: at least one moving plate to collect the thermoformed articles ejected from a moving mould; at least one stack forming station in which stacks composed of a predetermined number of articles are formed; at least one moving transfer plate to take the articles from the collection plate to the stack forming station; pusher means to transfer the articles from the transfer plate to the stack forming station; at least one conveyor device to transfer the stacks to a subsequent step of the production process; and means to transfer the stacks from the stack forming station to the conveyor device. The stack forming station of the machine according to the invention includes a plurality of fixed parallel seats with axes lying in a single plane.

This solution therefore allows stacks to be formed on a fixed structure with limited dimensions. Movement of the articles is produced by two moving plates, i.e. the collection plate and the transfer plate, which have a very limited mass.

Moreover, the absence of moving baskets allows a reduction in the overall dimensions of the machine as a whole. In fact, considering for example a mould with 45 cavities, disposed according to an array of 5 rows and 9 columns, prior art solutions generally propose a moving basket capable of moving 45 stacks of 100 pieces each. On the contrary, according to the present invention, the stacks would be formed in a fixed station and in a much lower number, i.e. the same number of stacks as the number of rows (or columns) of the array of cavities of a mould.

In practice, there is no true build-up of completed stacks but only transfer, always of the same quantity of stacked articles (sub-stacks) from the collection plate to the transfer plate, and from this to the station in which the completed stacks are effectively formed without interposition of any intermediate storage magazine of completed stacks.

The collection plate and the transfer plate preferably include a plurality of support seats for the articles. The seats have the same number and the same configuration as the cavities of the moving mould.

At each of the seats, the collection plate is provided with constraining means to receive and hold in position a sub-stack formed of two or more stacked articles. The number of articles can, for example, be equal to a sub-multiple of the predetermined number of articles forming each of the stacks.

The transfer plate, at each of its seats, also includes gripping means to pick up and transfer a sub-stack formed of two or more of the articles present in the collection plate in stacked condition.

The constraining and gripping means of the respective plates preferably include arms projecting from each of the plates, facing each other, and disposed at regular intervals along the perimeter of the seats.

The arms projecting from the collection plate are advantageously in positions staggered with respect to the arms projecting from the transfer plate, so that, when the latter moves to the pick-up position, the articles present in the collection plate can be easily picked up between the arms of the transfer plate.

The collection plate moves along a first direction parallel to the axes of the seats in the stack forming station, in order to transfer the sub-stacks of articles to the transfer plate.

In a possible embodiment, the transfer plate moves along a first direction perpendicular to the axes of the seats of the stack forming station. Once it has reached the stack forming station, the transfer plate is moved in steps in this direction in order to successively unload the articles disposed along each "row" of the plate, for example through a series of pushing members that move in the direction parallel to the axes of the seats of the stack forming station.

In another embodiment, the transfer plate can also move in steps along a second direction parallel to the plane in which the axes of the seats of the stack forming station lie. This allows the articles to be unloaded also in the case in which the forming mould is composed of cavities "staggered" from one row to the next. In this case, the collection and transfer plates will always have a configuration and a number of seats matching the cavities of the mould, but the transfer plate must be controlled with an alternate rectilinear movement which allows correct alignment with the fixed parallel seats of the stack forming station at each step.

The invention also relates to a process for forming stacks of thermoformed articles having a predetermined number of articles, the process including the steps of:
a) ejecting the thermoformed articles from a moving mould and depositing them in a moving collection plate to form sub-stacks during two or more forming cycles;
b) transferring the sub-stacks from the collection plate to a moving transfer plate;
c) transferring the sub-stacks from the transfer plate to a stack forming station, in which stacks composed of a predetermined number of articles are formed;
d) transferring the completed stacks from the stack forming station to a subsequent step of the production process by means of at least one conveyor device.

The stacks composed of a predetermined number of articles are preferably formed in the stack forming station, in a plurality of fixed parallel seats with axes lying in a single plane.

Further characteristics and advantages of the present invention will be more apparent from the description below, provided with reference to the accompanying drawings, wherein:
- Figure 1 is a schematic view of a machine for stacking thermoformed articles according to the present invention;
- Figure 2 is a perspective view of some elements of a machine for stacking thermoformed articles according to the present invention;
- Figure 3 is a front view of the stack forming station shown in Figure 2;
- Figure 4 is a front view of the collection plate shown in Figure 2;
- Figure 5 is a front view of the transfer plate shown in Figure 2;
- Figure 6 is a section view showing the configuration of the thermoformed articles in the collection plate and in the transfer plate;
- Figure 7 is an enlarged detail of the sectional view of Figure 6;
- Figure 8 is a perspective view of an enlarged detail of the two plates and of the respective thermoformed articles of Figures 6 and 7;
- Figure 9 is an elevated front view of a possible embodiment of the conveyor device of the machine according to the present invention;
- Figures 10A-10M show the process to produce stacks according to the present invention;
- Figure 11 schematically shows another possible embodiment of the present invention; and
- Figure 12 schematically shows a further embodiment of the present invention.

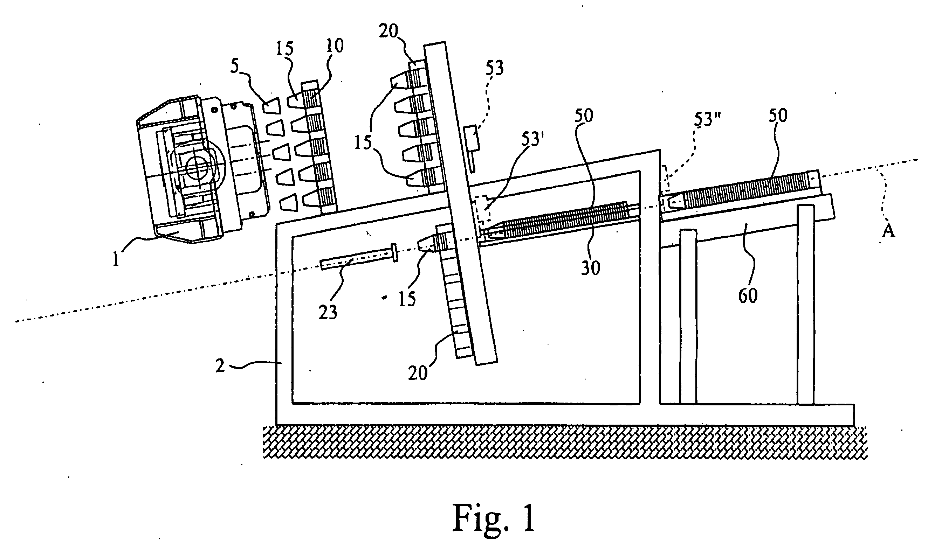

The view of Figure 1 schematically represents a machine for stacking thermoformed articles 5 which are ejected from a moving mould 1 of the tilting type, belonging to the thermoforming system, and deposited in a collection plate 10 which moves with respect to the frame 2 of the machine along a direction parallel to the axis A.

The path of the thermoformed articles in fact extends according to an axis A inclined with respect to the surface on which the frame 2 of the stacking machine rests. In the embodiment here shown for exemplary purpose, the axis A is parallel to the axes of the seats in the stack forming station 30 of the completed stacks 50, and is also parallel to the axes of the cavities of the moving mould 1 when these are in the position to eject the thermoformed articles, i.e. in the position shown in Figure 1.

At each cycle of the thermoforming system, the thermoformed articles 5 are ejected from the mould 1 and deposited in the plate 10 capable of holding in each seat a predetermined number of articles (for example, from 2 to 15 articles) in stacked condition, thus forming "sub-stacks" 15 each composed of a number of articles representing a sub-multiple of the predetermined number of articles for a completed stack 50 which must be formed in the stack forming station 30.

To transfer the sub-stacks 15 from the collection plate 10 to the stack forming station 30 a transfer plate 20 is used, moved in steps along a direction perpendicular to the axis A.

Alternatively to the embodiment here shown, the axis A can also be parallel to the plane in which the machine rests, or it can have an inclination different from that here shown. Moreover, the axis A could also be not parallel to the axes of the cavities of the moving mould and the collection plate 10 could also have an oscillating movement for a preset angle between a receiving position of the thermoformed articles and a position suitable to transfer the thermoformed articles to the transfer plate 20.

In the embodiment here shown, the collection plate 10 is moved towards the transfer plate 20 until reaching the exchange position of the sub-stacks 15. After exchange has taken place, the collection plate 10 returns towards the initial position (shown in Figure 1) standing by for the articles ejected from the mould 1.

Starting from its initial position (the top position in Figure 1), the transfer plate 20 then starts to move along a direction perpendicular to the axis A. During this movement, which takes place in consecutive steps, the sub-stacks 15 are unloaded by means of the pusher members 23 which unload the sub-stacks 15 from the transfer plate 20 onto the stack forming station 30. The lower position of the plate 20 in Figure 1 corresponds to the step to unload the last sub-stacks 15 in the stack forming station 30. After this step, the transfer plate 20 returns to the initial position already described above.

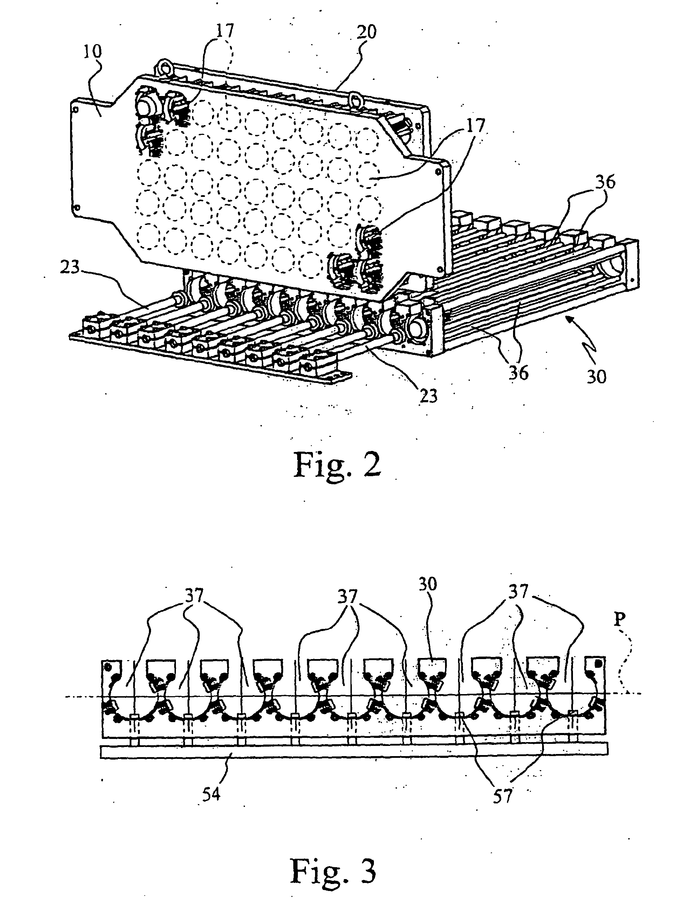

Upon reaching the predetermined number of articles, the stacks 50 are transferred from the stack forming station 30 to a conveyor device 60 to be directed towards a subsequent step of the production process. This transfer step is performed by means of a moving member 53 represented with solid lines in the idle position and with dashed lines in the operating positions. The moving member 53 is first moved from the idle position to the position to engage the stacks 50 (position 53') with a movement perpendicular to the axes of the seats of the stack forming station, and from here towards the final position of the transfer step (position 53") with a movement parallel to the axes of the seats of the stack forming station. The completed stacks 50 are then transferred onto the conveyor device 60 and the moving member 53 returns to its idle position along a reverse path to that described above. Figure 2 represents some of the elements of the machine described above, i.e. the plates 10 and 20 adjacent in the position to exchange the sub-stacks, the moving pusher members 23 and the stack forming station 30.

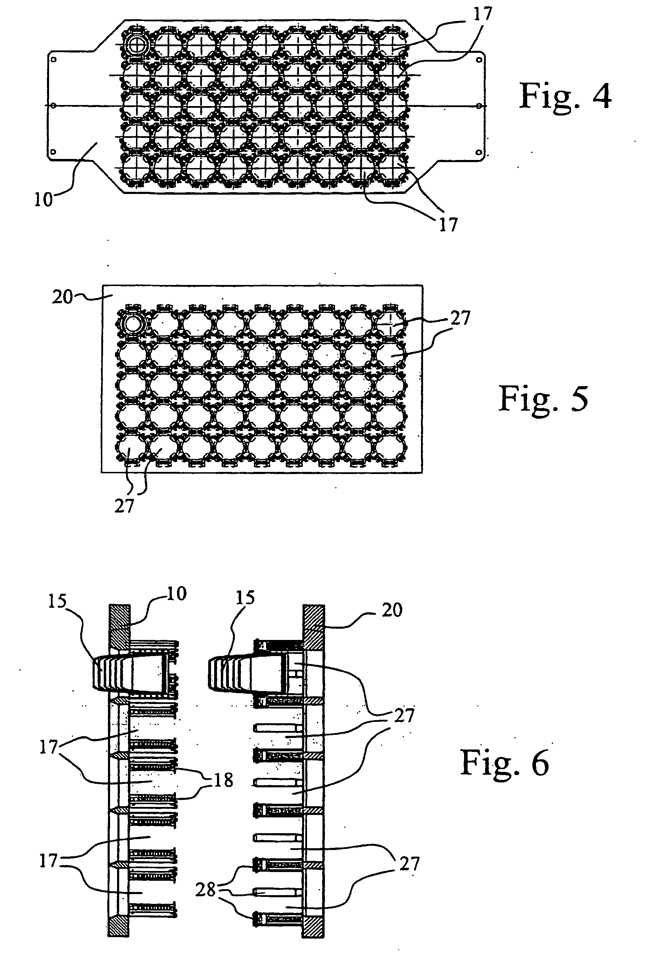

The plates 10 and 20, shown in greater detail also in the respective Figures 4 and 5, have a plurality of support seats 17 and 27 which have the same number and the same array configuration as the cavities of the mould 1 shown in Figure 1, for example a mould with a 5x9 array (5 rows and 9 columns) capable of producing 45 articles at each cycle.

The stack forming station 30 includes a plurality of seats 37 (Figure 3) delimited by bars 36 for example having a cylindrical section, with an open upper opening to allow passage of the moving member 53 (Figure 1) during transfer of the stack towards the conveyor device 60.

The view of Figure 3 shows the structure of the seats 37 in the stack forming station 30. The fixed parallel seats 37 have the same number of cavities in each row as the array of the mould and have parallel axes lying in a single plane P.

The lower part shows a compacting member 54 provided with notches 57 which project inside each of the seats 37 to engage the first article of each stack being formed. The compacting member 54 moves in synchronism to keep the stacks constantly compacted without opposing advance of the stacks as they are formed during depositing of the sub-stacks at each transfer cycle, and without preventing subsequent transfer thereof once completed.

In other words, during transfer of the sub-stacks in the seats 37, the compacting member is moved by a length approximately equivalent to that of the sub-stack, stopping in the position in which the ends of the notches 57 abut against the first article of each stack. Upon completion of the stacks, the compacting member 54 is moved to a position such as to release engagement with the first article at the top of each stack and then returned to the position standing by for the first sub-stacks to arrive.

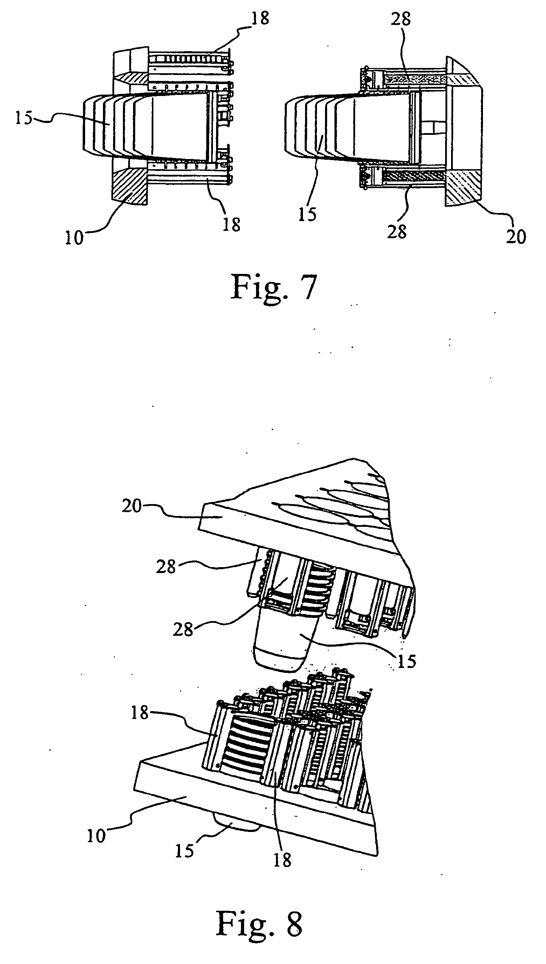

Figures 6 to 9 show some details of the means to constrain the sub-stacks 15 in the plates 10 and 20, and of the configuration of the sub-stacks 15 in the plates.

The constraining means in the plate 10 include a plurality of projecting arms 18 provided internally with notched surfaces and elastically articulated at the base coupling with the plate 10. The notches are oriented so as to facilitate sliding of the articles in only one direction and are provided in a number such as to constrain a certain number of articles identical to or greater than the number of articles forming each sub-stack 15.

The gripping means on the plate 20 include a plurality of projecting arms 28, provided at one end with a single notch projecting inwards, so that during transfer the end notches act on the rim of the last article inserted in the sub-stack 15. The arms 28 are also elastically articulated at the base coupling with the plate 20.

As can be noted, the arms 18 and the arms 28 are disposed at regular intervals along the perimeter of the respective seats 17 and 18 but are reciprocally staggered so as to avoid interference when the transfer plate 20 is positioned adjacent to the collection plate 10.

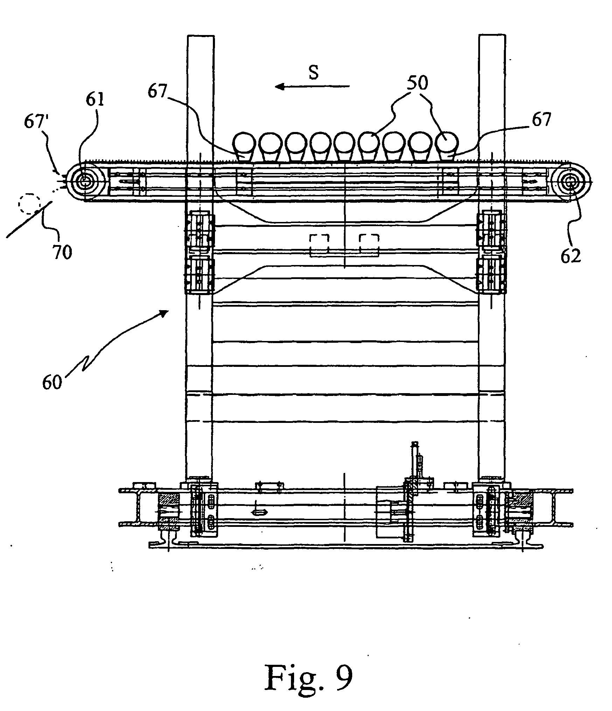

Figure 9 shows a conveyor device 60 including a plurality of saddles 67 suitable to receive the completed stacks 50 coming from the stack forming station. The saddles 67 in their stand-by position, are aligned and corresponding in number with the parallel seats 37 of the stack forming station 30.

The saddles 67 are mounted along the closed circuit of a conveyor system, such as a belt, a pair of toothed belts, a pair of chains or the like, driven in movement about two axes 61 and 62.

In the view of Figure 9, the conveyor system is in stand-by condition. After the stacks 50 have been deposited on the respective saddles 67 by the moving member 53, the conveyor system is operated to move the saddles 67 in the direction of the arrow S, towards the end corresponding to the axis 61 of the conveyor system.

The stacks 50 are then deposited downstream of the conveyor device 60, for example on a chute 70, to be directed towards a subsequent assembly or finishing step of the stacked articles.

Once the stack has also been unloaded on the last saddle 67, the idle position can be reached by continuing rotation of the conveyor system in the same direction, or by reversing rotation of the conveyor system.

The conveyor system can be advantageously driven by a brushless motor that can be easily controlled with a suitable motion law, i.e. with the possibility to give also positive or negative accelerations to the saddles 67 during their movement in the direction of the arrow S or in the opposite direction.

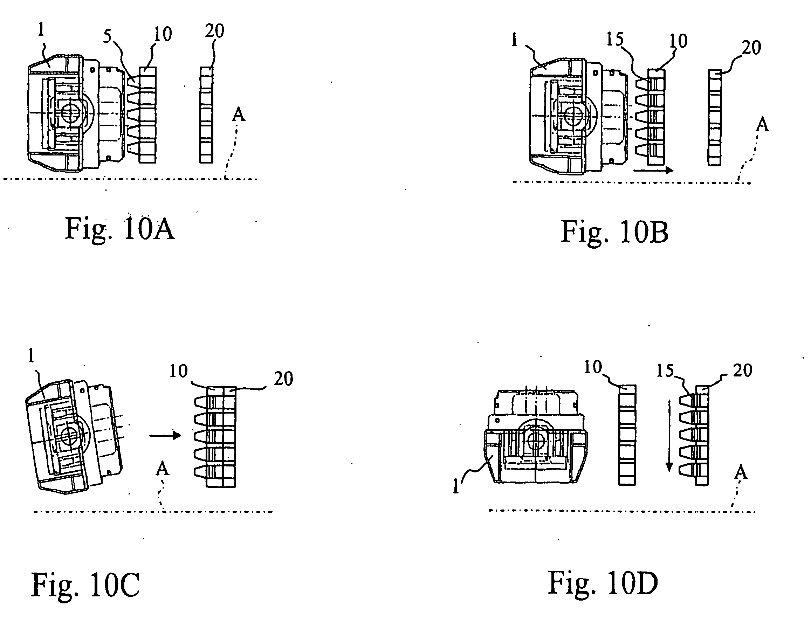

Figures 10A-10L show in greater detail the process to form the stacks already mentioned above. For the sake of simplicity, the various steps are shown as if the axis A were parallel to the edge of the drawing board, but it should be stressed that the axis A is however inclined with respect to the surface on which the machine rests.

Figure 10A shows the first step in which the mould 1 has produced in the first cycle a plurality of articles 5 which are deposited on the collection plate 10, while the transfer plate 20 is empty in the idle or stand-by position.

Upon completion of the first sub-stacks 15 (Figure 10B), the collection plate 10 is moved towards the transfer plate 20 until reaching the exchange position shown in Figure 10C, while the mould 1 is returning towards the operating position in which the articles are produced by thermoforming.

After having performed the exchange, the transfer plate 20 with the sub-stacks 15 starts to descend in steps towards the various unloading positions of the sub-stacks 15 onto the completed stack forming station.

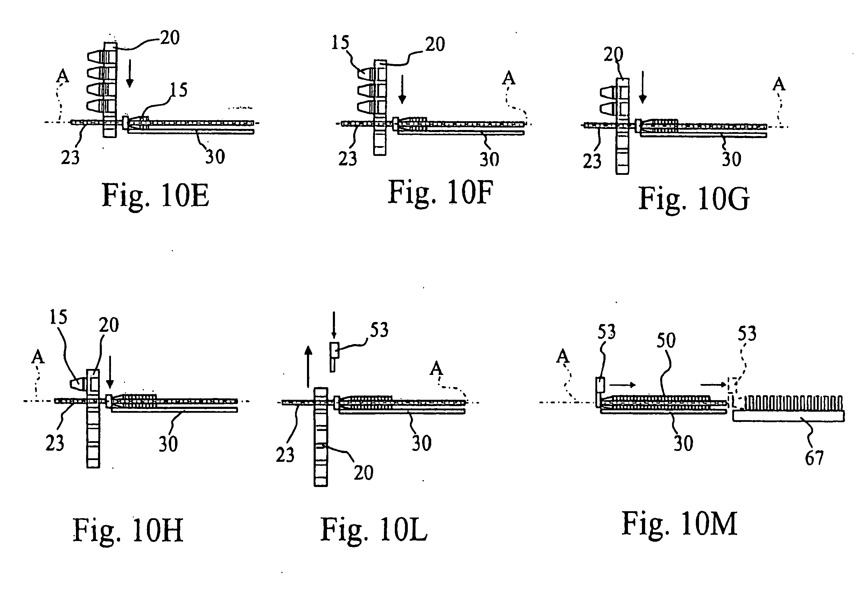

Figure 10E shows the first passage of the sub-stacks 15 present in the lower row of the plate 20 towards the seats 37 (Figure 3) of the stack forming station 30. In this instant the plate 20 is stopped and transfer of the sub-stacks 15 takes place by operating the pusher members 23 which pass through the seats involved on the plate 20 and thus accompany the sub-stacks 15 into the seats 37.

The pusher members 23 are then removed and the plate 20 can continue its descent until stopping in the position in which the seats 27 of the second row in the plate 20 are aligned with the seats 37 of the stack forming station (Figure 10F). The cycle then continues with the same sequence for the remaining rows of the transfer plate 20 (Figures 10G and 10H) until transfer of the last row of sub-stacks 15 in Figure 10L. At this point, the plate 20 is returned to the stand-by or idle position (Figure 10A) to start a new transfer cycle.

A completed stack, or a fraction of a completed stack, counting the articles of each stack as a function of the number of cycles performed and of the number of articles of which each sub-stack is composed, will therefore be found in the stack forming station 30.

As represented in Figure 10M, in the case in which the stacks 50 have been completed with the set number of articles, the moving member 53 is lowered, as already shown in Figure 1, to the position to engage the completed stacks 50, and then made to advance parallel to the axis A to transfer the stacks 50 from the stack forming station 30 to the respective saddles 67 of the conveyor device.

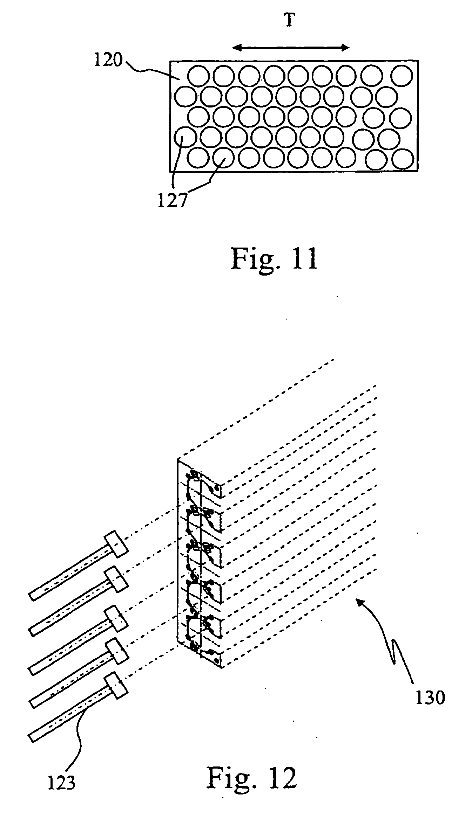

Figure 11 schematically shows, by way of example, an alternative embodiment of the present invention, in which the mould 1, and consequently the plates 10 and 20, have a different configuration and a different number of cavities and seats. In particular,

Figure 11 shows a configuration of seats in a plate 120, in which the seats 127 in successive rows are staggered. Besides the fact that the mould and the collection plate must have the same distribution of cavities and of seats respectively, this also means that the plate 120 must be moved in steps also in a third direction (arrow T) which is perpendicular to both the directions of movement shown previously.

For example, during the steps represented in Figures 10E to 10L, a transfer plate 120 like the one in Figure 11 should also be moved in successive steps along a direction perpendicular to the sheet, in order to correctly align its seats staggered with the seats 37 of the stack forming station at each transfer step.

Figure 12 schematically shows a further embodiment in which the stack forming station 130 is disposed according to a plane perpendicular to the plane in which the machine rests. In this case, the pusher members 123 are also disposed aligned with the axes of the respective seats, these latter being identical in number to the cavities of a column in the array configuration of the mould. In this case, the transfer plate 20 (not shown here) will have a movement perpendicular to the plane in which the axes of the seats of the station 130 lie.

The machine for stacking thermoformed articles according to the present invention is thus suitable to be installed in thermoforming plants provided with a mould, or half-mould of moving type and, in particular, a plant provided with mould or half-mould of tilting type.

## Claims

1. A machine for stacking thermoformed articles (5), including:
- at least one stack forming station (30) in which stacks (50) composed of a predetermined number of said articles (5) are formed;
- at least one moving transfer plate (20) to take said articles (5) from at least one collection plate (10) to said stack forming station (30);
- pusher means (23) to transfer the articles (5) from said transfer plate (20) to said stack forming station (30);
- at least one conveyor device (60) to transfer said stacks (50) to a subsequent step of the production process, and
wherein said stack forming station includes a plurality of fixed parallel seats (37) with axes lying in a single plane, **characterized in that** said collection plate (10) is movable to collect the thermoformed articles (5) ejected from a moving mould (1); and **in that** it includes means (53) to transfer said stacks (50) from said stack forming station (30) to said conveyor device (60).

2. The machine according to claim 1, wherein said collection plate (10) and said transfer plate (20) include a plurality of support seats (17, 27) for said articles (5), and wherein said seats (17, 27) have the same number and the same configuration as the cavities in said mould (1).

3. The machine according to claim 1 or 2, wherein each of the seats (17) of said collection plate (10) includes constraining means to receive and hold in position a sub-stack (15) formed of two or more of said stacked artlcles (5) in a number equal to a sub-multiple of the predetermined number of articles (5) forming each of said stacks (50).

4. The machine according to claim 1 or 2, wherein each of the seats (27) of said transfer plate (20) includes gripping means to pick up and transfer a sub-stack (15) formed of two or more of said stacked articles (5) in a number equal to a sub-multiple of the predetermined number of articles forming each of said stacks (50).

5. The machine according to claim 3 or 4, wherein said constraining means and said gripping means include arms (18, 28) projecting from each of said plates and disposed at regular intervals along the perimeter of said seats.

6. The machine according to claim 5, wherein the arms (18) projecting from said collection plate (10) are placed in positions staggered with respect to the arms projecting from said transfer plate (10).

7. The machine according to claim 1, wherein said collection plate (10) moves along a direction parallel to the axes of the seats (37) of said stack forming station (30).

8. The machine according to claim 1, wherein said transfer plate (20) moves along a first direction perpendicular to the axes of the seats (37) of said stack forming station (30).

9. The machine according to claim 1, wherein said transfer plate (20) can move along a second direction parallel to the plane in which the axes of the seats (37) of said stack forming station (30) lie.

10. The machine according to claim 1, wherein said conveyor device (60) includes a plurality of saddles (67) for depositing the stacks (50), said saddles (67) being disposed on a conveyor system and corresponding in number to the parallel seats (37) of said stack forming station (30).

11. The machine according to claim 1, wherein the plane in which the axes of the seats (37) of said stack forming station (30) lie is inclined with respect to the plane in which the machine rests.

12. The machine according to claim 1, wherein the plane in which the axes of the seats (37) of said stack forming station (30) lie is perpendicular to the plane in which the machine rests.

13. A process for forming stacks (50) of thermoformed articles (5) having a predetermined number of articles, the process including the steps of:
a) ejecting the thermoformed articles (5) from a moving mould (1) and depositing them in a moving collection plate (10) to form sub-stacks (15) during two or more forming cycles;
b) transferring said sub-stacks (15) from said collection plate (10) to a moving transfer plate (20);
c) transferring said sub-stacks (15) from said transfer plate (20) to a stack forming station (30), in which stacks (50) composed of a predetermined number of said articles are formed;
d) transferring said completed stacks (50) from said stack forming station (30) to a subsequent step of the production process by means of at least one conveyor device (60),
wherein said stacks (50) composed of a predetermined number of said articles (5) are formed in said stack forming station (30) which includes a plurality of fixed parallel seats (37) with axes lying in a single plane.

14. The process according to claim 13, wherein said collection plate (10) and said transfer plate (20) include a plurality of support seats (17, 27) for said articles, and wherein said seats (17, 27) have the same number and the same configuration as the cavities in said moving mould (1).

15. The process according to claim 13 or 14, wherein said step a) includes, in each of said seats (17) of the collection plate (10), the receipt and collection of a sub-stack (15) formed of two or more of said articles (5) stacked in a number equal to a sub-multiple of the predetermined number of articles forming each of said stacks (50).

16. The process according to claim 13 or 14, wherein said step b) includes, in each of said seats (27) of the transfer plate (20), the receipt and collection of a sub-stack (15) formed of two or more of said articles stacked in a number equal to a sub-multiple of the predetermined number of articles forming each of said stacks (50).

17. The process according to claim 13, wherein said step b) is performed by crossing the arms (18, 28) projecting from said collection plate with the arms projecting from said transfer plate (20).

18. The process according to claim 13, wherein said step b) is performed by moving said collection plate (10) along a direction parallel to the axes of the seats of said stack forming station (30):

19. The process according to claim 13, wherein said step c) is performed by moving said transfer plate (20) in steps along a first direction perpendicular to the axes of the seats of said stack forming station (30).

20. The process according to claim 13, wherein said step c) is performed by moving said transfer plate (20) in steps along a second direction parallel to the axes of the seats of said stack forming station (30).

21. The process according to claim 13, wherein said step d) is performed by means of a conveyor device (60) including a plurality of saddles (67) for depositing the stacks (50), said saddles being disposed on a conveyor member and corresponding in number to the parallel seats (37) of said stack forming station (30).

22. The process according to claim 21, wherein said conveyor member moves in a first direction to transfer said completed stacks (50) from said stack forming station (30) to a subsequent step of the production process, and in the opposite direction to return said saddles (67) to the position in which the stacks arrive from said receiving station.

23. A thermoforming plant including a machine for stacking the thermoformed articles according to any one of claims 1 to 12.

## Patentansprüche

1. Vorrichtung zum Stapeln thermogeformter Gegenstände (5), umfassend:
- wenigstens eine stapelbildende Station (30), in welcher aus einer vorbestimmten Anzahl von Gegenständen (5) bestehende Stapel (50) gebildet werden;
- wenigstens eine bewegliche Überführungsplatte (20), um die Gegenstände (5) von wenigstens einer Sammelplatte (10) zu der stapelbildenden Station (30) zu überführen;
- Schiebermittel (23), um die Gegenstände (5) von der Überführungsplatte (20) zu der stapelbildenden Station (30) zu übergeben;
- wenigstens eine Fördervorrichtung (60), um die Stapel (50) zu einem nachfolgenden Schritt des Herstellungsprozesses zu übergeben, und
- wobei die stapelbildende Station eine Mehrzahl von stationären, parallelen Aufnahmen (37) mit in einer Ebene liegenden Achsen umfasst,
**dadurch gekennzeichnet, dass**
die Sammelplatte (10) beweglich ist, um die von einer bewegten Form (1) abgegebenen thermogeformten Gegenstände (5) aufzufangen; und dass sie Überführungsmittel (53) umfasst, um die Stapel (50) von der stapelbildenden Station (30) zu der Fördervorrichtung (60) zu überführen.

2. Vorrichtung nach Anspruch 1,
wobei die Sammelplatte (10) und die Überführungsplatte (20) eine Mehrzahl von Halteaufnahmen (17, 27) für die Gegenstände (5) umfassen und wobei die Aufnahmen (17, 27) die gleiche Anzahl und die gleiche Anordnung wie die Hohlräume in der Form (1) aufweisen.

3. Vorrichtung nach Anspruch 1 oder 2,
wobei jede von den Aufnahmen (17) der Sammelplatte (10) Begrenzungsmittel umfasst zum Aufnehmen und Inlagehalten eines Teilstapels (15), gebildet aus zwei oder mehr von gestapelten Gegenständen (5) in einer Anzahl, die einem ganzzahligen Teiler der vorbestimmten Anzahl von Gegenständen (5), die jeweils einen Stapel (50) bilden, entspricht.

4. Vorrichtung nach Anspruch 1 oder 2,
wobei jede der Aufnahmen (27) der Überführungsplatte (20) Greifmittel umfasst zum Aufnehmen und Überführen eines Teilstapels (15), gebildet aus zwei oder mehreren gestapelten Gegenständen (5) in einer Anzahl, die einem ganzzahligen Teiler der vorbestimmten Anzahl von Gegenständen, die jeweils einen Stapel (50) bilden, entspricht.

5. Vorrichtung nach Anspruch 3 oder 4,
wobei die Begrenzungsmittel und die Greifmittel sich von jeder der Platten vorstehende und in regelmäßigen Abständen entlang der Umfänge der Aufnahmen angeordnete Stützen (18, 28) umfassen.

6. Vorrichtung nach Anspruch 5,
wobei die von der Sammelplatte (10) vorstehenden Stützen (18) an Stellen mit Versatz bezüglich der von der Überführungsplatte (20) vorstehenden Stützen angeordnet sind.

7. Vorrichtung nach Anspruch 1,
wobei sich die Sammelplatte (10) entlang einer Richtung parallel zu den Achsen der Aufnahmen (37) der stapelbildenden Station (30) bewegt.

8. Vorrichtung nach Anspruch 1,
wobei sich die Überführungsplatte (20) entlang einer ersten Richtung rechtwinkelig zu den Achsen der Aufnahmen (37) der stapelbildenden Station (30) bewegt.

9. Vorrichtung nach Anspruch 1,
wobei sich die Überführungsplatte (20) entlang einer zweiten Richtung parallel zu der Ebene, in welcher die Achsen der Aufnahmen (37) der stapelbildenden Station liegen, bewegen kann.

10. Vorrichtung nach Anspruch 1,
wobei die Fördervorrichtung (60) eine Mehrzahl von Sätteln (67) zum Ablegen der Stapel (50) umfasst, wobei die Sättel (67) auf einer Fördereinrichtung angeordnet sind und in Anzahl der parallelen Aufnahmen (37) der stapelbildenden Station (30) entsprechen.

11. Vorrichtung nach Anspruch 1,
wobei die Ebene, in welcher die Achsen der Aufnahmen (37) der stapelbildenden Station (30) liegen, geneigt ist bezüglich der Ebene, in welcher die Vorrichtung ruht.

12. Vorrichtung nach Anspruch 1,
wobei die Ebene, in welcher die Achsen der Aufnahmen (37) der stapelbildenden Station (30) liegen, rechtwinkelig ist zu der Ebene, in welcher die Vorrichtung ruht.

13. Verfahren zum Bilden von Stapeln (50) aus thermogeformten Gegenständen (5) mit einer vorbestimmten Anzahl von Gegenständen,
wobei das Verfahren die Schritte umfasst:
a) Auswerfen der thermogeformten Gegenstände (5) aus einer beweglichen Form (1) und deren Ablegen in einer beweglichen Sammelplatte (10), um Teilstapel (15) während zwei oder mehrerer Formdurchgänge zu bilden;
b) Übergeben der Teilstapel (15) von der Sammelplatte (10) an eine bewegliche Überführungsplatte (20);
c) Übergeben der Teilstapel (15) von der Überführungsplatte (20) an eine stapelbildende Station (30), in welcher Stapel (50), zusammengesetzt aus einer vorbestimmten Anzahl der Gegenstände, gebildet werden;
d) Übergeben der ganzen Stapel (50) von der stapelbildenden Station (30) an einen nachfolgenden Schritt des Herstellungsprozesses mittels wenigstens einer Fördereinrichtung (60),
wobei die aus einer vorbestimmten Anzahl der Gegenstände (5) zusammengesetzten Stapel (50) in der stapelbildenden Station (30) gebildet werden, welche eine Mehrzahl von stationären, parallelen Aufnahmen (37) mit in einer Ebene liegenden Achsen umfasst.

14. Verfahren nach Anspruch 13,
wobei die Sammelplatte (10) und die Überführungsplatte (20) eine Mehrzahl von Halteaufnahmen (17, 27) für die Gegenstände umfassen und wobei die Aufnahmen (17, 27) die gleiche Anzahl und die gleiche Anordnung wie die Hohlräume in der beweglichen Form (1) haben.

15. Verfahren nach Anspruch 13 oder 14,
wobei Schritt a) das Aufnehmen und Sammeln eines Teilstapels (15), gebildet aus zwei oder mehreren der Gegenstände (5) in einer Anzahl, die einem ganzzahligen Teiler der vorbestimmten Anzahl von Gegenständen, die jeweils einen Stapel (50) bilden, entspricht, in jeder der Aufnahmen (17) der Sammelplatte (10) umfasst.

16. Verfahren nach Anspruch 13 oder 14,
wobei Schritt b) das Aufnehmen und Sammeln eines Teilstapels (15), gebildet aus zwei oder mehreren der Gegenstände (5) in einer Anzahl, die einem ganzzahligen Teiler der vorbestimmten Anzahl von Gegenständen, die jeweils einen Stapel (50) bilden, entspricht, in jeder der Aufnahmen (27) der Überführungsplatte (20) umfasst.

17. Verfahren nach Anspruch 13,
wobei Schritt b) durch Durchqueren der von der Sammelplatte vorstehenden Stützen (18, 28) mit den von der Überführungsplatte (20) vorstehenden Stützen durchgeführt wird.

18. Verfahren nach Anspruch 13,
wobei Schritt b) durch Bewegen der Sammelplatte (10) entlang einer Richtung parallel zu den Achsen der Aufnahmen der stapelbildenden Station (30) durchgeführt wird.

19. Verfahren nach Anspruch 13,
wobei Schritt c) durch Bewegen der Überführungsplatte (20) in Schritten entlang einer ersten Richtung rechtwinkelig zu den Achsen der Aufnahmen der stapelbildenden Station (30) durchgeführt wird.

20. Verfahren nach Anspruch 13,
wobei Schritt c) durch Bewegen der Überführungsptatte (20) in Schritten entlang einer zweiten Richtung parallel zu den Achsen der Aufnahmen der stapelbildenden Station (30) durchgeführt wird.

21. Verfahren nach Anspruch 13,
wobei Schritt d) mittels einer Fördereinrichtung umfassend eine Mehrzahl von Sätteln (67) zum Ablegen der Stapel (50) durchgeführt wird, wobei die Sättel auf einer Fördereinrichtung angeordnet sind und in Anzahl der parallelen Aufnahmen (37) der stapelbildenden Station (30) entsprechen.

22. Verfahren nach Anspruch 21,
wobei sich die Fördereinrichtung in eine erste Richtung bewegt, um die komplettierten Stapel (50) von der stapelbildenden Station (30) zu einem nachfolgenden Schritt des Herstellungsverfahrens zu transportieren und in eine entgegengesetzte Richtung, um die Sättel (67) in die Position, in welcher die Stapel von der Empfangsstation ankommen, zurückzubewegen.

23. Thermoformanlage, umfassend eine Vorrichtung zum Stapeln der thermogeformten Gegenstände nach einem der Ansprüche 1 bis 12.

## Revendications

1. Machine d'empilage d'articles thermoformés (5), comprenant :
- au moins une station de formation de piles (30) dans laquelle des piles (50) composées d'un nombre prédéterminé desdits articles (5) sont formées ;
- au moins une plaque de transfert mobile (20) adaptée pour transférer lesdits articles (5) de au moins une plaque de collecte (10) jusqu'à ladite station de formation de piles (30) ;
- des moyens de poussée (23) adaptés pour transférer les articles (5) de ladite plaque de transfert (20) jusqu'à ladite station de formation de piles (30) ;
- au moins un dispositif transporteur (60) adapté pour transférer lesdites piles (50) jusqu'à une étape consécutive du processus de production ; et
dans laquelle ladite station de formation de piles comprend une pluralité de sièges parallèles fixes (37) dont des axes se situent sur un plan unique,
**caractérisée en ce que** ladite plaque de collecte (10) peut se déplacer pour collecter les articles thermoformés (5) éjectés hors d'un moule mobile (1) et **en ce qu'**elle comprend des moyens (53) adaptés pour transférer lesdites piles (50) de ladite station de formation de piles (30) jusqu'au dit dispositif transporteur (60) ;

2. Machine selon la revendication 1, dans laquelle ladite plaque de collecte (10) et ladite plaque de transfert (20) comprennent une pluralité de sièges support (17, 27) pour lesdits articles (5), et dans laquelle lesdits sièges (17, 27) ont le même nombre et la même configuration que les cavités dans ledit moule (1).

3. Machine selon la revendication 1 ou 2, dans laquelle chacun des sièges (17) de ladite plaque de collecte (10) comprend des moyens de retenue adaptés pour recevoir et maintenir en position une sous-pile (15) formée de deux desdits articles (5) ou plus dans un nombre égal à un sous-multiple du nombre prédéterminé d'articles (5) qui forme chacune desdites piles (50).

4. Machine selon la revendication 1 ou 2, dans laquelle chacun des sièges (27) de ladite plaque de transfert (20) comprend des moyens de préhension adaptés pour prélever et transférer une sous-pile (15) formée de deux desdits articles empilés (5) ou plus dans un nombre égal à un sous-multiple du nombre prédéterminé d'articles (5) qui forme chacune desdites piles (50).

5. Machine selon la revendication 3 ou 4, dans laquelle lesdits moyens de retenue et lesdits moyens de préhension comprennent des bras (18, 28) qui se projettent à partir de chacune desdites plaques et qui sont disposés à intervalles réguliers le long du périmètre desdits sièges.

6. Machine selon la revendication 5, dans laquelle les bras (18) qui se projettent à partir de ladite plaque de collecte (10) sont placés à des positions en quinconce par rapport aux bras qui se projettent à partir de ladite plaque de transfert (10).

7. Machine selon la revendication 1, dans laquelle ladite plaque de collecte (10) se déplace le long d'une direction parallèle aux axes des sièges (37) de ladite station de formation de piles (30).

8. Machine selon la revendication 1, dans laquelle ladite plaque de transfert (20) se déplace le long d'une première direction perpendiculaire aux axes des sièges (37) de ladite station de formation de piles (30).

9. Machine selon la revendication 1, dans laquelle ladite plaque de transfert (20) se déplace le long d'une seconde direction parallèle au plan sur lequel se situent les axes des sièges (37) de ladite station de formation de piles (30).

10. Machine selon la revendication 1, dans laquelle ledit dispositif transporteur (60) comprend une pluralité de selles (67) sur lesquelles déposer les piles (50), lesdites selles (67) étant disposées sur un système transporteur et correspondant, en nombre, aux sièges parallèles (37) de ladite station de formation de piles (30).

11. Machine selon la revendication 1, dans laquelle le plan sur lequel se situent les axes des sièges (37) de ladite station de formation de piles (30) est incliné par rapport au plan sur lequel se situe la machine.

12. Machine selon la revendication 1, dans laquelle le plan sur lequel se situent les axes des sièges (37) de ladite station de formation de piles (30) est perpendiculaire au plan sur lequel se situe la machine.

13. Procédé de formation de piles (50) d'articles thermoformés (5) comprenant un nombre prédéterminé d'articles, le procédé comprenant les étapes consistant :
a) à éjecter les articles thermoformés (5) hors d'un moule mobile (1) et les déposer ensuite dans une plaque de collecte mobile (10) de sorte à former des sous-piles (15) au cours de deux cycles de formation ou plus ;
b) à transférer lesdites sous-piles (15) de ladite plaque de collecte (10) jusqu'à une plaque de transfert mobile (20) ;
c) à transférer lesdites sous-piles (15) de ladite plaque de transfert (20) jusqu'à une station de formation de piles (30), dans laquelle des piles (50) composées d'un nombre prédéterminé desdits articles sont formées ;
d) à transférer lesdites piles formées (50) de ladite station de formation de piles (30) jusqu'à une étape consécutive du processus de production au moyen d'au moins un dispositif transporteur (60),
dans lequel lesdites piles (50) composées d'un nombre prédéterminé desdits articles (5) sont formées dans ladite station de formation de piles (30) qui comprend une pluralité de sièges parallèles fixes (37) dont des axes se situent sur un plan unique.

14. Procédé selon la revendication 13, dans lequel ladite plaque de collecte (10) et ladite plaque de transfert (20) comprennent une pluralité de sièges support (17, 27) pour lesdits articles, et dans lequel lesdits sièges (17, 27) ont le même nombre et la même configuration que les cavités dans ledit moule (1).

15. Procédé selon la revendication 13 ou 14, dans lequel ladite étape a) comprend, dans chacun desdits sièges (17) de la plaque de collecte (10), la réception et la collecte d'une sous-pile (15) formée de deux desdits articles (5) ou plus qui sont empilés dans un nombre égal à un sous-multiple du nombre prédéterminé d'articles qui forme chacune desdites piles (50).

16. Procédé selon la revendication 13 ou 14, dans lequel ladite étape b) comprend, dans chacun desdits sièges (27) de la plaque de transfert (20), la réception et la collecte d'une sous-pile (15) formée de deux desdits articles ou plus qui sont empilés dans un nombre égal à un sous-multiple du nombre prédéterminé d'articles qui forme chacune desdites piles (50).

17. Procédé selon la revendication 13, dans lequel ladite étape b) est exécutée en croisant les bras (18, 28) qui se projettent à partir de ladite plaque de collecte avec les bras qui se projettent à partir de ladite plaque de transfert (20).

18. Procédé selon la revendication 13, dans lequel ladite étape b) est exécutée en déplaçant ladite plaque de collecte (10) le long d'une direction parallèle aux axes des sièges de ladite station de formation de piles (30).

19. Procédé selon la revendication 13, dans lequel ladite étape c) est exécutée en déplaçant ladite plaque de transfert (20) le long d'une première direction perpendiculaire aux axes des sièges de ladite station de formation de piles (30).

20. Procédé selon la revendication 13, dans lequel ladite étape c) est exécutée en déplaçant ladite plaque de transfert (20) par étapes le long d'une seconde direction perpendiculaire aux axes des sièges de ladite station de formation de piles (30).

21. Procédé selon la revendication 13, dans lequel ladite étape d) est exécutée au moyen d'un dispositif transporteur (60) comprenant une pluralité de selles (67) sur lesquelles déposer les piles (50), lesdites selles étant disposées sur un organe transporteur et correspondant, en nombre, aux sièges parallèles (37) de ladite station de formation de piles (30).

22. Procédé selon la revendication 21, dans lequel ledit organe transporteur se déplace dans une première direction pour transférer lesdites piles formées (50) de ladite station de formation de piles (30) jusqu'à une étape consécutive du processus de production, et dans la direction opposée pour ramener lesdites selles (67) à la position dans laquelle les piles arrivent depuis ladite station de réception.

23. Usine de thermoformage comprenant une machine adaptée pour empiler les articles thermoformés selon l'une quelconque des revendications 1 à 12.
